# EUROPEAN PATENT SPECIFICATION

(11) **EP 3 079 985 B1**
(45) Date of publication and mention of the grant of the patent: **17.10.2018**
(21) Application number: 14869485.4
(22) Date of filing: 15.12.2014
(51) Int. Cl.: B64D 11/06, B29C 67/00

(54) **AIRCRAFT SEAT SURROUND WITH 3D PRINTED DECORATIVE MOLDINGS**
FLUGZEUGSITZUMGEBUNG MIT IM 3D-DRUCK HERGESTELLTEN ZIERFORMKÖRPERN
COQUE DE SÉPARATION DE SIÈGE D'AÉRONEF DOTÉE DE MOULURES DÉCORATIVES IMPRIMÉES EN 3D

(30) Priority: 13.12.2013 US 201361915771 P
(43) Date of publication of application: 19.10.2016
(73) Proprietor: B/E Aerospace, Inc., Wellington, FL 33414 (US)
(72) Inventor: MEISTER, Peter C., Miami, FL 33129 (US); MAHABALESHWARA, Aravinda, Bangalore 560059 (IN)
(74) Representative: Grünecker Patent- und Rechtsanwälte PartG mbB
(86) International application number: PCT/US2014/070295
(87) International publication number: WO 2015/089500

(56) References cited:
- EP-A1- 1 384 565
- EP-A2- 0 980 826
- GB-A- 2 454 751
- US-A- 5 462 786
- US-A1- 2009 076 642
- US-A1- 2009 146 006
- US-A1- 2010 314 794
- US-A1- 2013 241 246
- US-A1- 2013 241 258
- US-B2- 7 380 752
- US-B2- 8 178 033

## Description

### TECHNICAL FIELD AND BACKGROUND OF THE INVENTION

The present invention relates generally to furnishings for use in aircraft interiors, and more particularly, to aircraft seat surrounds, partitions and panels manufactured using three-dimensional (3D) printed parts applied to underlying structural panels.

Commercial passenger aircraft interiors are typically divided into different seating classes. While economy classes may include multiple rows of adjacent seats with little to no privacy between seats, business and premium classes may include individual passenger suites configured to provide total privacy and passenger comfort. Individual suites may be defined and separated using seat surrounds that function as privacy partitions as well as supporting surfaces for furniture, tables, ottomans, etc. Seat surrounds must therefore not only be capable of supporting heavy loads, but must also meet required G-force certification. US2013241246 discloses a passenger suite that has capping on the top of the structural panels. US 2013/241258A1 and GB 2454751A each disclose a passenger suite having capping on the side of the structural panels.

Conventional seat surrounds, partitions and panels are typically manufactured using molded parts and structural panels. Molded parts may be injection molded, thermally formed, etc., and thus require a new mold to be made for each and every new part. Since molds are expensive in terms of material cost and require long lead times, manufacturers are reluctant to add substantial ornamentation or customization to partitions, and are reluctant to make changes to existing molded parts.

With the invention of 3D printing and additive manufacturing, manufacturers are now able to make 3D solid objects from digital models without the need for molds, thus significantly reducing lead times and costs, and allowing manufacturers to be more creative in design and customization.

As such, it would be desirable to employ 3D printing technology in manufacturing aircraft interior upfittings, and particularly, in designing and constructing furnishings that include both universal and customized parts.

### BRIEF SUMMARY OF THE INVENTION

It is therefore an object of the invention to provide a furnishing adapted for use in an aircraft interior including at least one 3D printed part.

It is another object of the invention to provide an aircraft interior furnishing including a structural panel and a 3D printed decorative molding applied to the structural panel.

It is a further object of the invention to provide a passenger suite partition including structural panels arranged to define walls of the suite, and 3D printed decorative moldings applied to the structural panels to dress-up the panels.

It is a further object of the invention to provide a seat surround including a plurality of structural panels arranged to form walls of the seat surround, at least some of the walls spaced to provide access to an adjacent aisle or passenger suite, at least one of the plurality of structural panels including a 3D printed decorative molding.

To achieve the foregoing and other objects and advantages, in a first embodiment the present invention provides an aircraft passenger seat surround defining a passenger suite and including at least one structural panel forming a wall of the seat surround, and comprising spaced front and rear structural panels, the front structural panel defining a cove for accommodating a passenger seat and the rear structural panel defining a cove for accommodating a raised ottoman; and a three-dimensional printed molding attached to the at least one structural panel.

In another aspect, the front structural panel may include a window and the three-dimensional printed molding may frame the window.

In another aspect, the three-dimensional printed molding may be a door casing, and an entrance to the passenger suite defined between the spaced front and rear structural panels may be framed with the door casing.

In another aspect, the three-dimensional printed molding may be capping attached along top edges of the front and rear structural panels, with adjacent sections of the three-dimensional printed molding overlapping and include an opening therethrough for receiving a fastener for attaching the adjacent sections together.

In another aspect, the three-dimensional printed molding may cap a top edge of the at least one structural panel.

In another aspect, the at least one structural panel may be secured to a base adapted to mount to an aircraft floor.

In another aspect, a gap may be provided between a portion of the three-dimensional printed molding and the underlying at least one structural panel for inserting and retaining facing applied to the at least one structural panel.

In another aspect, the seat surround may include at least one support beam secured to a face of the at least one structural panel.

In another aspect, the seat surround may include a base to which the at least one structural panel is attached, the base adapted to mount to an aircraft floor, a passenger seat secured to the base, and an ottoman supported by the at least one structural panel in a position elevated from the base.

In another aspect, the three-dimensional printed molding may be decorative molding applied to an outer face of the at least one structural panel.

Embodiments of the invention can include one or more or any combination of the above features and configurations.

Additional features, aspects and advantages of the invention will be set forth in the detailed description which follows, and in part will be readily apparent to those skilled in the art from that description or recognized by practicing the invention as described herein. It is to be understood that both the foregoing general description and the following detailed description present various embodiments of the invention, and are intended to provide an overview or framework for understanding the nature and character of the invention as it is claimed. The accompanying drawings are included to provide a further understanding of the invention, and are incorporated in and constitute a part of this specification.

### BRIEF DESCRIPTION OF THE DRAWINGS

Features, aspects and advantages of the invention are understood when the following detailed description of the invention is read with reference to the accompanying drawings, in which:
FIG. 1 is a perspective view of a seat surround according to an embodiment of the invention;
FIG. 2 is a top plan view of the seat surround of FIG. 1 showing furniture positioned within the suite defined by the seat surround;
FIG. 3 is a sectional view through a wall of the seat surround taken along line A-A of FIG. 2;
FIG. 4 is an exploded perspective view of the seat surround of FIG. 1 showing the underlying structural panels and overlying 3D printed decorative moldings;
FIG. 5 is another perspective view of the seat surround of FIG. 1 showing beams for supporting an elevated ottoman;
FIG. 6 is a detailed view illustrating the interlocking of the 3D printed decorative moldings; and
FIG. 7 shows the interlocking 3D printed decorative moldings of FIG. 6 from another angle.

### DETAILED DESCRIPTION OF THE INVENTION

The present invention will now be described more fully hereinafter with reference to the accompanying drawings in which exemplary embodiments of the invention are shown. However, the invention may be embodied in many different forms and should not be construed as limited to the representative embodiments set forth herein. The exemplary embodiments are provided so that this disclosure will be both thorough and complete, and will fully convey the scope of the invention and enable one of ordinary skill in the art to make, use and practice the invention.

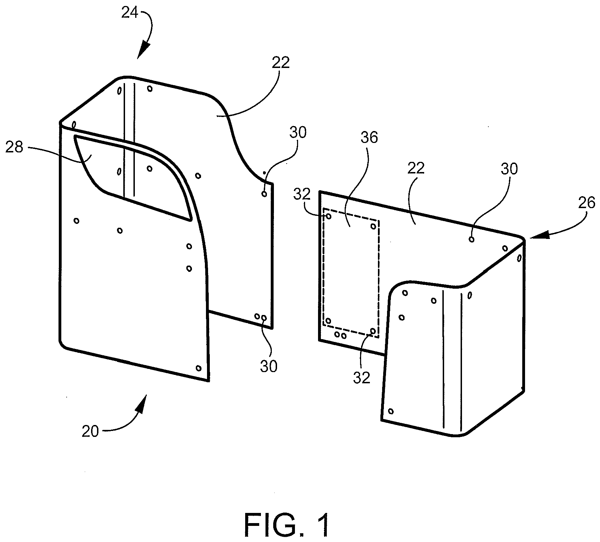

Referring to FIG. 1, a seat surround manufactured according to an embodiment of the invention is shown generally at reference numeral 20. Although the manufacturing methods provided herein are described with specific reference to a seat surround, it should be understood that the manufacturing methods of the present invention may be applied to other interior furnishings including, but not limited to, partitions, panels, walls, doors, furniture, etc. Therefore, the term "seat surround" as used herein is intended to encompass at least any wall construction including both a structural member and a 3D printed part.

The seat surround 20 generally includes a plurality of structural panels 22 arranged to form the walls of a single passenger suite. The structural panels 22 may be spaced or interrupted along their length to provide access into the suite from an adjacent aisle or other passenger suite. The particular seat surround 20 shown in FIG. 1 has a generally elongate rectangular shape dimensioned to provide passenger living space in which a seat, ottoman, tables, and other furnishings may be positioned. The shape and height of the walls, as well as the shape and square footage of the suite, may vary and are not intended to be limiting.

The shape of the seat surround 20 dictates the basic shape of the passenger suite. As shown, the seat surround is made up of spaced front and rear halves 24, 26. The front half 24 defines a cove for accommodating an adjustable passenger seat, for example, a lie-flat capable seat. As such, the height of the walls of the front half 24 of the seat surround are higher than those of the rear half 26 to provide a degree of privacy for the seated passenger. A window 28 may be provided through one of the walls adjacent the seat for allowing the seated passenger to see out to the aisle or an adjacent suite. The rear half 26 of the seat surround defines a cove for accommodating an ottoman, table or other furnishing. The front and rear halves 24, 26 are spaced along at least one side to provide an entrance into the suite. The front and rear halves 24, 26 may each include unitary wall construction, or in an alternative embodiment, made include wall sections adapted to attach together.

Each of the front and rear halves 24, 26 are constructed from a combination of underlying structural panels 22 and applied 3D printed decorative moldings. The structural panels may include, but are not limited to, panels including a honeycomb base or multi-layered arrangement (e.g., sandwich panels) including a core panel sandwiched between a plurality of structural plies. The core panel may comprise a substantial portion of the thickness of the panel and can be an aramid core panel, honeycomb panel, or like panel that is preferably lightweight and fire retardant. In panels including structural plies or structural layers, the plies or layers may be arranged above and below the core panel parallel to the core panel and run coextensive with the core panel. The structural plies can include any number of plies above and below the core panel and may be arranged at varying orientations to optimize the distribution of loads through the panel. The structural panels may include facing adhesively bonded to the underlying core or layered arrangement.

A first set of openings shown at reference numeral 30 are provided for receiving fasteners for attaching 3D printed decorative moldings to the structural panels 22. A second set of openings shown at reference numeral 32 are provided for attaching furnishings such as an ottoman, deployable table 36, storage compartment, etc. The first set of openings 30 are generally positioned near the top edge of the front and rear halves 24, 26 for attaching decorative cap molding to the seat surround 20, as described in detail below. The first seat of openings 30 may also be positioned near the bottom edge of the seat surround and surrounding the window, for example, for attaching decorative molding near the bottom and around the window. The deployable table 36 may attach to the inside wall of the seat surround about mid-span along the length thereof. The deployable table 36 may pivot to horizontal for use and stow flush against the wall between uses.

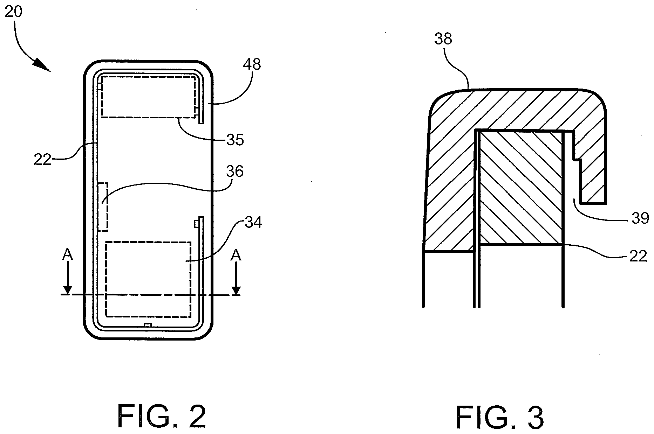

Referring to FIG. 2, when viewed from above, the passenger seat 34 and ottoman 35 are positioned at opposite ends of the suite in their respective coves. The deployable table 36 stows to the side of the passenger seat 34 and deploys to a horizontal use position forward of the seat. The passenger seat 34 may be a lie-flat capable seat. The ottoman 35 is spaced from the passenger seat 34 when the seat is an upright or reclined sitting position. When the passenger seat 34 is in a horizontal sleeping position, the spaced ottoman 35 may form part of the horizontal bed such that the seat and ottoman together substantially fill the entirety of the suite with a flat horizontal bed. The ottoman 35 is thus preferably elevated from the floor, and storage space may be provided beneath the ottoman. The structural panels 22, passenger seat 34 and ottoman 35 may be supported on a base 48 configured to attach to the aircraft floor in order to provide a pre-packaged passenger suite configured for rapid installation in the aircraft. Although not shown, the suite may include other furnishings such as storage compartments, a video monitor, etc. The opening to the suite may optionally include a door configured to sweep or slide between open and closed positions to close off the suite.

Referring to FIG. 3, a sectional view through a portion of the seat surround 20 illustrates the underlying structural panel 22 and overlying 3D printed 38. While the 3D printed part can include any part type, the specific 3D printed part 38 shown in FIG. 3 is a decorative cap molding applied over and along the top edge of the underlying structural panel 22. The 3D printed part 38 covers the top of the structural panel 22 and extends at least partway along the length of at least one of the faces of the panel. A portion of the 3D printed part 38 may be spaced from the face of the panel 22 to provide a gap 39 for inserting/retaining a decorative sheet, coating or facing applied to a face of the wall.

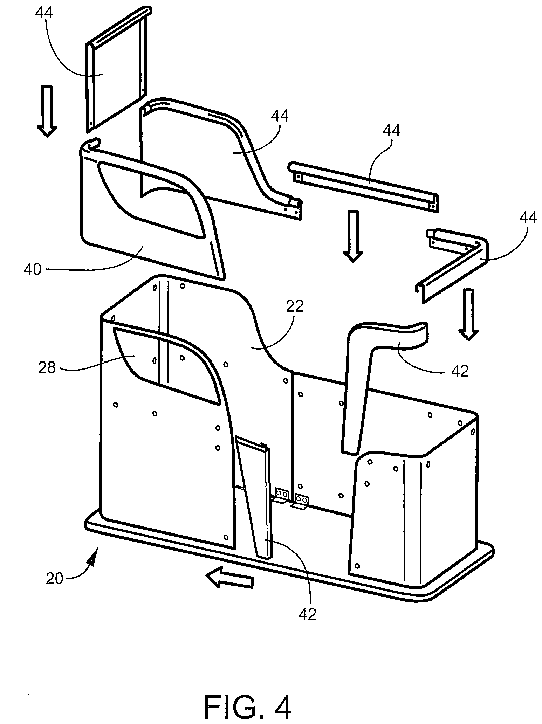

Referring to FIG. 4, the complete seat surround 20 includes individual 3D printed parts applied to the underlying structural panels 22. For example, the window 28 may be framed with a 3D printed part 40 that finishes the opening. The entrance to the suite may be framed with protective/decorative 3D printed casings 42, the top edges of the structural panels 22 may be capped with decorative moldings 44, etc. The 3D printed parts may include structural pieces as well as decorative moldings for providing a specific look or customization to the suite. The 3D printed parts may be attached using fasteners and the first set of openings 30, or may be glued or otherwise bonded to the underlying panels.

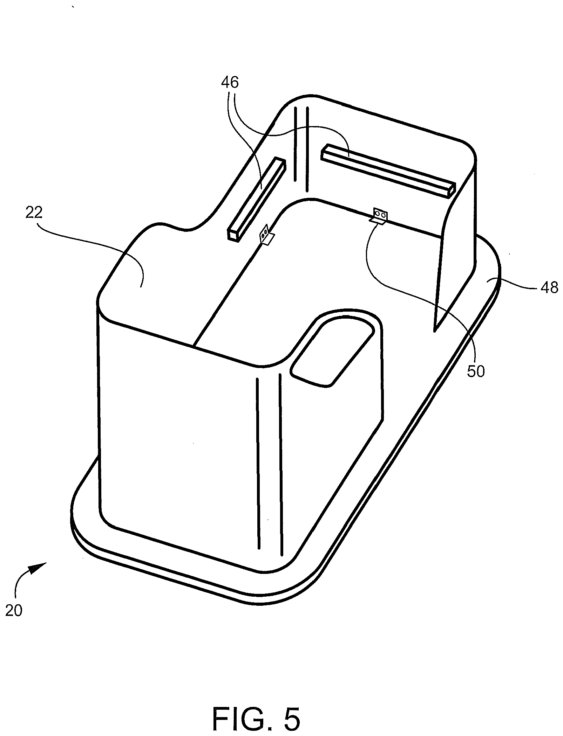

Referring to FIG. 5, support beams 46 may be provided along the interior side of the structural panels 22 of the seat surround 20 for support the ottoman 35 in an elevated position, thereby providing a storage compartment or foot well vertically beneath the ottoman. The seat surround 20 may attach directly to the aircraft floor, or may attach to the base 48 which is configured to attach to the floor. In the suite embodiment including the base 48 as shown in FIG. 5, essentially a complete suite may be manufactured in advance, including or excluding furniture, and then positioned within the aircraft. The structural panels 22 may attach to the base 48 using L-brackets 50 or other fasteners concealed beneath molding, carpeting or furniture.

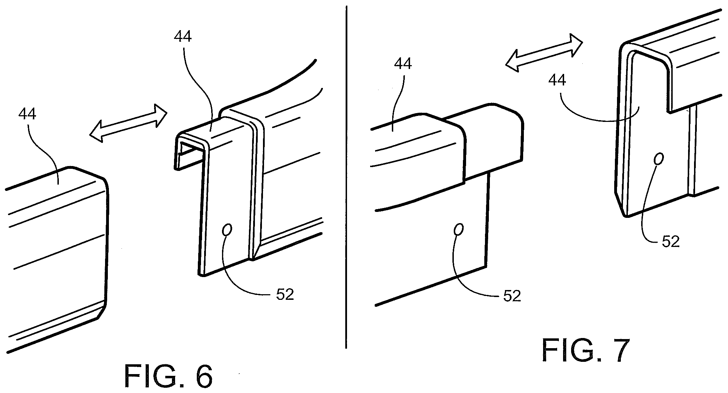

3D printed panels can be attached as decorative caps, trim, or molding over the structural panels 22. As shown in FIGS. 6 and 7, two 3D parts/panels may lock together, for example, at perpendicular wall intersections or at the transition between curves and straight segments. A portion of one 3D printed molding 44 may overlap a portion of another 3D printed molding 44, and holes 52 through each of the parts may align when overlapped so that a single fastener can pass through both holes and optionally through a hole in the underlying structural panel. The fastener locks the parts together and may secure them to the underlying structural panel.

While the present invention has been described above with reference to specific embodiments and examples, it is intended that various details of the invention may be changed without departing from the scope of the invention. Furthermore, the foregoing description of the preferred embodiments of the invention and best mode for practicing the invention are provided for the purpose of illustration only and not for the purpose of limitation.

## Claims

1. An aircraft passenger seat surround (20) defining a passenger suite, comprising:
at least one structural panel (22) forming a wall of the seat surround (20) and comprising spaced front and rear structural panels (24, 26), the front structural panel (24) defining a cove for accommodating a passenger seat and the rear structural panel (26) defining a cove for accommodating a raised ottoman; and
a molding (44) attached to the at least one structural panel (22), wherein the molding (44) is capping attached along top edges of the front and rear structural panels (24, 26), **characterized in that** the molding (44) is a three dimensional printed molding (44) and the molding (44) further comprises adjacent sections overlapping and including an opening (30) therethrough for receiving a fastener for attaching the adjacent sections together.

2. The aircraft passenger seat surround (20) of claim 1. wherein the front structural panel (24) comprises a window (28) and the molding (44) further frames the window (28).

3. The aircraft passenger seat surround (20) of claim 1, wherein the molding (44) further comprises door casing, and an entrance to the passenger suite defined between the spaced front and rear structural panels (24, 26) is framed with the door casing.

4. The aircraft passenger seat surround (20) of claim 1, wherein molding (44) caps a top edge of the at least one structural panel (22).

5. The aircraft passenger suite surround (20) of claim 1, wherein the at least one structural panel (22) is secured to a base (48) adapted to mount to an aircraft floor.

6. The aircraft passenger seat surround (20) of claim 1, wherein a gap is provided between a portion of the molding (44) and the underlying at least one structural panel (22) for inserting and retaining facing applied to the at least one structural panel (22).

7. The aircraft passenger seat surround (20) of claim 1, further comprising at least one support beam (46) secured to a face of the at least one structural panel (22).

8. The aircraft passenger seat surround (20) of claim 1, further comprising a base (48) to which the at least one structural panel (22) is attached adapted to mount to an aircraft floor, a passenger seat (34) secured to the base (48), and an ottoman (35) supported by the at least one structural panel (22) in a position elevated from the base.

9. The aircraft passenger seat surround (20) of claim 1, further comprising decorative molding (44) applied to an outer face of the at least one structural panel.

## Patentansprüche

1. Einfassung (20) eines Flugzeug-Passagiersitzes, die eine Passagier-Suite bildet, wobei sie umfasst:
wenigstens eine strukturelle Verkleidung (22), die eine Wand der Sitz-Einfassung (20) bildet und eine vordere sowie eine hintere strukturelle Verkleidung (24, 26) umfasst, die voneinander beabstandet sind, wobei die vordere strukturelle Verkleidung (24) eine Umfassung zum Aufnehmen eines Passagiersitzes bildet und die hintere strukturelle Verkleidung (26) eine Umfassung zum Aufnehmen einer erhöhten Fußablage bildet; sowie
ein Formteil (44), das an der wenigstens einen strukturellen Verkleidung (22) angebracht ist, wobei das Formteil eine Abdeckung bildet, die an oberen Kanten der vorderen und der hinteren strukturellen Verkleidung (24, 26) angebracht ist, **dadurch gekennzeichnet, dass** das Formteil (44) ein im 3D-Druck hergestelltes Formteil (44) ist und das Formteil (44) des Weiteren aneinandergrenzende Profilabschnitte umfasst, die einander überlappen und eine durch sie hindurch verlaufende Öffnung enthalten, die ein Befestigungselement zum Anbringen der aneinandergrenzenden Profilabschnitte aneinander enthält.

2. Einfassung (20) eines Flugzeug-Passagiersitzes nach Anspruch 1, wobei die vordere strukturelle Verkleidung (24) ein Fenster (28) umfasst und das Formteil (44) des Weiteren das Fenster (28) einrahmt.

3. Einfassung (20) eines Flugzeug-Passagiersitzes nach Anspruch 1, wobei das Formteil (44) des Weiteren eine Türverkleidung umfasst und ein Eingang zu der Passagier-Suite, der zwischen der vorderen und der hinteren strukturellen Verkleidung (24, 26) ausgebildet ist, die beabstandet sind, mit der Türverkleidung eingerahmt wird.

4. Einfassung (20) eines Flugzeug-Passagiersitzes nach Anspruch 1, wobei das Formteil (44) eine obere Kante der wenigstens einen strukturellen Verkleidung (22) abdeckt.

5. Einfassung (20) eines Flugzeug-Passagiersitzes nach Anspruch 1, wobei die wenigstens eine strukturelle Verkleidung (22) an einem Sockel (48) befestigt ist, der zum Montieren an einem Flugzeug-Boden eingerichtet ist.

6. Einfassung (20) eines Flugzeug-Passagiersitzes nach Anspruch 1, wobei ein Zwischenraum zwischen einem Abschnitt des Formteils (44) und der darunter liegenden wenigstens einen strukturellen Verkleidung (22) zum Einführen und Halten von Verblendung vorhanden ist, die auf die wenigstens eine strukturelle Verkleidung (22) aufgebracht ist.

7. Einfassung (20) eines Flugzeug-Passagiersitzes nach Anspruch 1, die des Weiteren wenigstens einen Stützträger (46) umfasst, der an einer Fläche der wenigstens einen strukturellen Verkleidung (22) befestigt ist.

8. Einfassung (20) eines Flugzeug-Passagiersitzes nach Anspruch 1, die des Weiteren einen Sockel (48), an dem die wenigstens eine strukturelle Verkleidung (22) angebracht ist und der zum Montieren an einem Flugzeug-Boden eingerichtet ist, einen Passagiersitz (34), der an dem Sockel (48) befestigt ist, sowie eine Fußauflage (35) umfasst, die von der wenigstens einen strukturellen Verkleidung (22) an einer über dem Sockel erhöhten Position getragen wird.

9. Einfassung (20) eines Flugzeug-Passagiersitzes nach Anspruch 1, die des Weiteren ein Zier-Formteil (44) umfasst, das an einer Außenfläche der wenigstens einen strukturellen Verkleidung aufgebracht ist.

## Revendications

1. Coque de séparation de siège passager d'aéronef (20) définissant une suite passager, comprenant :
au moins un panneau de structure (22) formant une paroi de la coque de siège (100) et comprenant les panneaux de structure avant et arrière (24, 26) espacés, le panneau de structure avant (24) définissant une niche permettant de loger un siège passager et le panneau de structure arrière (26) définissant une niche permettant de loger un divan relevé, et
une moulure (44) fixée à ce ou à ces panneaux de structure (22), la moulure (44) étant fixée par recouvrement le long des bords supérieurs des panneaux de structure avant et arrière (24, 26), **caractérisé en ce que** la moulure (44) est un moulage (44) obtenu par impression tridimensionnelle, et la moulure (44) comprend en outre des sections adjacentes se chevauchant et incluant une ouverture (30) en son travers afin de recevoir une attache permettant de fixer ensemble les sections adjacentes

2. Coque de séparation de siège passager d'aéronef (20) selon la revendication 1, dans lequel le panneau de structure avant (24) comprend une fenêtre (28), et la moulure (44) encadre en outre la fenêtre (28).

3. Coque de séparation de siège passager d'aéronef (20) selon la revendication 1, dans lequel la moulure (44) comprend en outre un cadre de porte, et une entrée vers la suite passager, définie entre les panneaux de structure avant et arrière (24, 26) espacés, est encadrée avec le cadre de porte.

4. Coque de séparation de siège passager d'aéronef (20) selon la revendication 1, dans lequel une moulure (44) coiffe le bord supérieur du ou des panneaux de structure (22).

5. Coque de séparation de siège passager d'aéronef (20) selon la revendication 1, dans lequel le ou les panneaux de structure (22) sont immobilisés sur une base (48) conçue pour se monter sur un plancher d'aéronef.

6. Coque de séparation de siège passager d'aéronef (20) selon la revendication 1, dans lequel un intervalle est prévu entre une partie de la moulure (44) et le soubassement d'au moins un panneau de structure (22) en vue de l'insertion et de la retenue d'un parement appliqué sur le ou les panneaux de structure (22).

7. Coque de séparation de siège passager d'aéronef (20) selon la revendication 1, comprenant en outre au moins une poutre support (46) immobilisée sur une face du ou des panneaux de structure (22).

8. Coque de séparation de siège passager d'aéronef (20) selon la revendication 1, comprenant en outre une base (48) sur laquelle est fixé, ou sont fixés, le ou les panneaux de structure (22), laquelle est conçue pour se monter sur un plancher d'aéronef, un siège passager (34) immobilisé sur la base (48) et un divan (35) supporté par le ou les panneaux de structure (22) dans une position surélevée par rapport à la base.

9. Coque de séparation de siège passager d'aéronef (20) selon la revendication 1, comprenant en outre une moulure décorative (44) appliquée sur la surface externe du ou des panneaux de structure.
